# EUROPEAN PATENT APPLICATION

(11) **EP 2 725 273 A1**
(43) Date of publication of application: **30.04.2014**
(21) Application number: 13189248.1
(22) Date of filing: 18.10.2013
(51) Int. Cl.: F16L 25/00, F16L 33/26

(54) **Universal hydraulic connector for tubes**

(30) Priority: 23.10.2012 IT PD20120310
(71) Applicant: Everlux S.r.l., 35138 Padova (IT)
(72) Inventor: Tognon, Francesco, 35129 Padova (IT)
(74) Representative: Modiano, Micaela Nadia

(57) **Abstract**

A universal hydraulic connector (10) for tubes, comprising a first sleeve (11) with an inner thread (12) and a first inner abutment shoulder (13) for two axially opposite and separate rigid ring portions (14, 15) for gripping a tube (16), which are supported by an elastically deformable annular seal (17) which is adapted to be fitted on a mouth (18) of the tube (16), a second sleeve (19) having a first, externally threaded portion (20) for screwing to the inner thread (12) of the first sleeve (11) and a second, contiguous, coaxial joining portion (21); between the first portion (20) and the second portion (21) of the second sleeve (19) there is a second internal abutment shoulder (22) for the outer rim (23) of the annular seal (17), with the seal pressed between the grip ring portions (14, 15) and the second shoulder (22).

## Description

The present invention relates to a universal hydraulic connector for tubes.

Nowadays connectors for tubes, and in particular for metallic corrugated tubes, are made in as many sizes as there are tube diameters available.

This implies a significant availability in storage both for the maker and for the retailer, who must have connectors available for every tube size type.

Similarly, it would be difficult for a professional user to have all possible types of connectors, for every eventuality, available to him/her in the place in which he/she is called on to work.

A further drawback of conventional connectors is the possibility that, whether they are made of plastic material or made of metallic material, they will undergo deformations if used at very high or very low temperatures, and such deformations, even if minimal, can compromise the stable seal of the connector proper, with obvious effects in terms of functionality on the whole system of which the connector is part.

Furthermore, in conventional connectors, the inner gasket adapted to provide the seal is generally fitted over the tube and closed between two mutually opposite shoulders which are defined inside the two parts of the connector, but without being stably anchored to the tube proper, and thus being able, even if minimally, to move in an axial direction, with the risk that, especially for corrugated tubes, escape routes will be generated for a fluid under pressure passing through the connector.

Another problem with conventional connectors, and in particular with connectors made of metal, is constituted by the fact that they represent a thermal bridge between the fluid that passes through them and the outside, a problem which is thus particularly significant in the event of the passage of fluids at particularly high or particularly low temperatures.

The aim of the present invention is to provide a universal hydraulic connector for tubes which is capable of overcoming the above mentioned drawbacks of conventional connectors.

Within this aim, an object of the invention is thus to devise a connector that can be adapted to a plurality of tube diameters, both for tubes made of plastic material and for tubes made of metallic material.

Another object of the invention is to provide a connector that thus makes it possible for producers, retailers and users to reduce the necessary storage space for stowing connectors for all possible tube diameters.

A further object of the invention is to provide a connector that is undeformable at both high and low temperatures.

A still further object of the invention is to provide a connector that significantly reduces the thermal bridge problems typical of conventional connectors.

Another object of the invention is to provide a universal hydraulic connector for tubes that can be made using conventional systems and technologies.

This aim and these and other objects which will become better evident hereinafter are achieved by a universal hydraulic connector for tubes, **characterized in that** it comprises a first sleeve with an inner thread and a first internal abutment shoulder for two axially opposite and separate rigid ring portions for gripping a tube, which are supported by an elastically deformable annular seal which is adapted to be fitted on a mouth of said tube, a second sleeve having a first, outer threaded portion for screwing to said inner thread of the first sleeve and a second, contiguous, coaxial joining portion, between said first portion and said second portion of said second sleeve there being a second internal abutment shoulder for the outer rim of said annular seal, said seal being pressed between said grip ring portions and said second shoulder.

Further characteristics and advantages of the invention will become better apparent from the description of a preferred, but not exclusive, embodiment of the universal connector according to the invention, which is illustrated by way of non-limiting example in the accompanying drawings wherein:

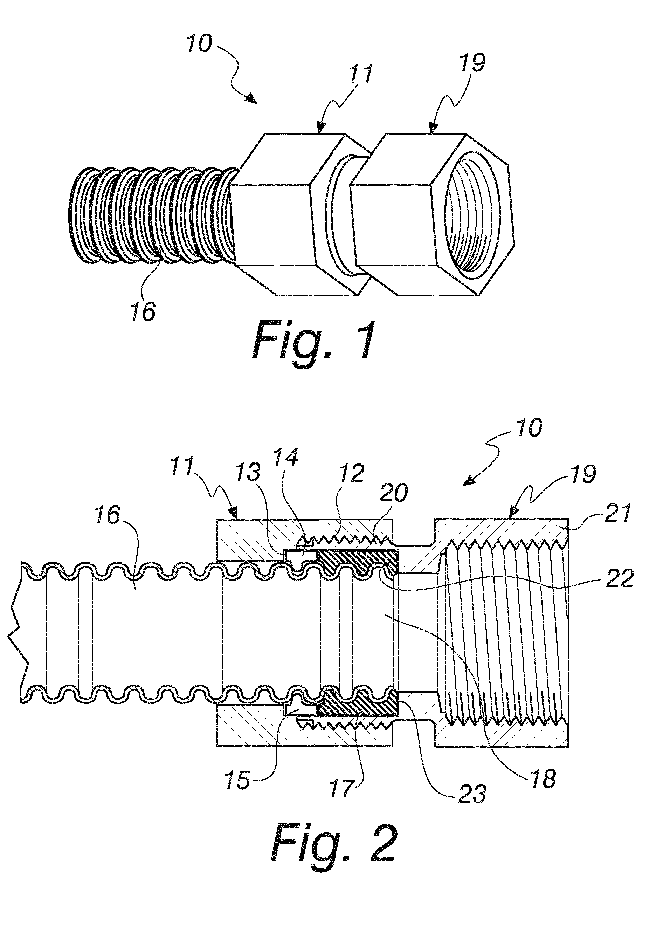

- Figure 1 is an assembled perspective view of a connector according to the invention;
- Figure 2 is a sectional side view of the connector in Figure 1;

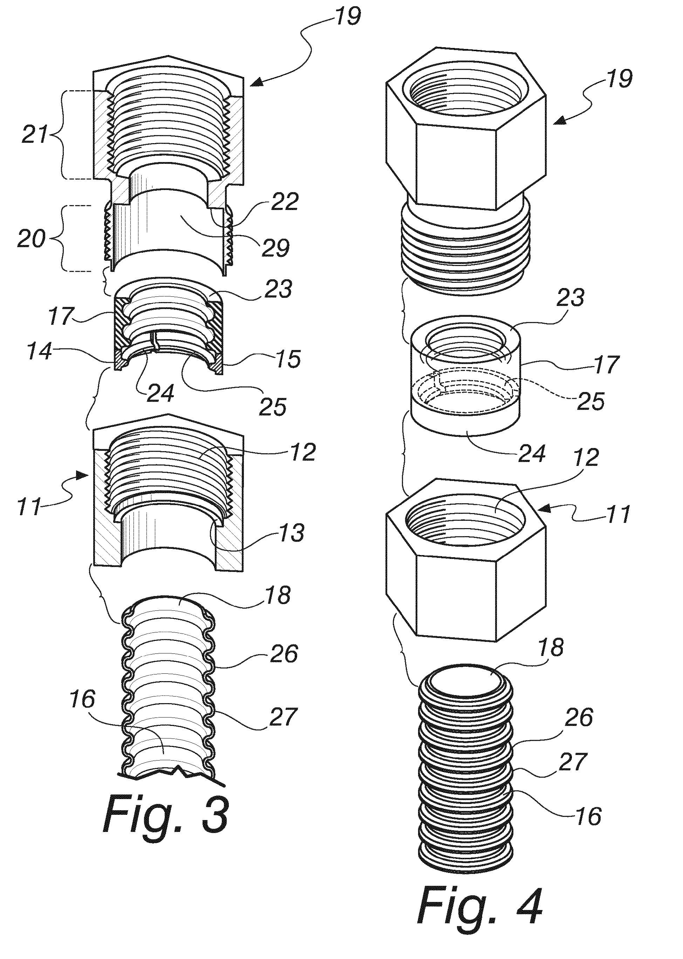

- Figure 3 is a cutaway exploded perspective view of the connector according to the invention;
- Figure 4 is an exploded perspective view of the connector according to the invention.

With reference to the figures, a universal hydraulic connector for tubes according to the invention is generally designated with the reference numeral 10.

The universal connector 10 comprises a first sleeve 11 with an inner thread 12 and a first internal abutment shoulder 13 for two axially opposite and separate rigid ring portions 14 and 15, for gripping a tube 16.

In the present embodiment the tube 16 is a metallic corrugated tube.

The rigid ring portions 14 and 15 are supported by an elastically deformable annular seal 17 which is adapted to be fitted on to a mouth 18 of the tube 16 to be connected.

The connector 10 also comprises a second sleeve 19, which is provided with a first portion 20, externally threaded, for screwing to the inner thread 12 of the first sleeve 11, and a second, contiguous, coaxial joining portion 21.

The second joining portion 21 is here shown for the purposes of example as internally threaded for the screwing for example of an intermediate nipple, not shown for the sake of simplicity, for connection with another, identical connector according to the invention, which is installed on another tube to be connected.

Between the first 20 and second 21 portions of the second sleeve 19 there is a second internal abutment shoulder 22 for the outer rim 23 of the annular seal 17, the latter item being pressed between the grip ring portions 14 and 15 and said second shoulder 22.

The annular seal 17 is molded in place on a face, which is perpendicular to the axis of the connector, of the grip ring portions 14 and 15, and is internally shaped complementarily with respect to the corrugation of the corrugated tube 16.

Similarly, the grip ring portions 14 and 15 are internally shaped complementarily with respect to the corrugation of the corrugated tube 16, so as to arrange themselves with an internal rib 24 and 25 which is inserted between two consecutive annular raised portions 26 and 27 of the corrugated tube 16.

The two ring portions 24 and 25 are thus integral with the annular seal 17 and are mounted on the corrugated tube 16 together with it, and are held by the same annular seal 17 in position so as to surround the tube proper.

The two grip ring portions 14 and 15, which are axially locked to the tube 16 thanks to the internal ribs 24 and 25, define a stable resting support for the annular seal when this is compressed by screwing the first sleeve 11 and the second sleeve 19 together.

As the screwing proceeds, the annular seal 17 is pressed between the ring portions 14 and 15 and the second shoulder 22 and, squashed in an axial direction, it deforms thus exerting a greater pressure mainly in a radial direction between the tube 16 and the inner surface 29 of the first portion 20 of the second sleeve 19, in which the annular seal is adapted to be accommodated, thus proportionally improving the seal of the connector.

The first sleeve 11 and the second sleeve 19, as well as the grip ring portions 14 and 15, are made of high-performance thermoplastic resin, and preferably of polyphenylsulfone.

The annular seal 17 is made of silicone material, and preferably of liquid silicone rubber (LSR).

The first and second sleeves 11 and 19 preferably have a hexagonal outer shape, so as to be capable of being easily mounted by hand or with conventional tools.

The universal connector 10 according to the invention, thanks to the annular seal 17 and to the grip ring portions 14 and 15, can be used not only for a single tube of preset diameter, but also for tubes of similar diameter, with differences of a millimeter of diameter both larger and smaller, since in addition to the seal, which is elastically deformable, the ring portions, by arriving at different distances from each other, also adapt to the diameter of the tube and grip it thus fully performing their function as a resting support for the seal; thus, for example, a single connector can be used for a family of tubes with diameters of between eleven and thirteen millimeters.

In this manner the storage space is reduced to substantially a third of the space required by the numerous types of conventional connectors.

Furthermore, with the invention a connector has been devised that, thanks to the peculiar material of which it is made, polyphenylsulfone, is capable of withstanding internal pressures of up to 12 bar, is capable of guaranteeing a watertight seal from -50°C to +230°C, and has a weight four to six times lower than conventional metallic connectors.

Furthermore, if the components are filled, in the manufacturing step, with Aerogel, then the connector will also have an extremely low heat conductivity, thus also eliminating the thermal bridge problems typical of conventional connectors.

Last but not least, with the invention a universal hydraulic connector has been provided which can be made with conventional systems and technologies.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. PD2012A000310 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A universal hydraulic connector (10) for tubes, **characterized in that** it comprises a first sleeve (11) with an inner thread (12) and a first internal abutment shoulder (13) for two axially opposite and separate rigid ring portions (14, 15) for gripping a tube (16), which are supported by an elastically deformable annular seal (17) which is adapted to be fitted on a mouth (18) of said tube (16), a second sleeve (19) having a first, externally threaded portion (20) for screwing to said inner thread (12) of the first sleeve (11), and a second, contiguous, coaxial joining portion (21), between said first portion (20) and said second portion (21) of said second sleeve (19) there being a second internal abutment shoulder (22) for the outer rim (23) of said annular seal (17), said seal being pressed between said grip ring portions (14, 15) and said second shoulder (22).

2. The hydraulic connector according to claim 1, **characterized in that** said annular seal (17) is molded in place on a face, which is perpendicular to the axis of the connector, of the grip ring portions (14, 15).

3. The hydraulic connector according to claim 2, **characterized in that** said annular seal (17) is internally shaped complementarily with respect to the corrugation of a tube (16) of the corrugated type.

4. The connector according to one or more of the preceding claims, **characterized in that** said grip ring portions (14, 15) are internally shaped complementarily with respect to the corrugation of a corrugated tube (16), so as to arrange themselves with an internal rib (24, 25) which is inserted between two consecutive annular raised portions (26, 27) of the corrugated tube (16).

5. The connector according to one or more of the preceding claims, **characterized in that** said first sleeve (11) and said second sleeve (19), as well as the grip ring portions (14, 15), are made of thermoplastic resin, preferably polyphenylsulfone.

6. The connector according to one or more of the preceding claims, **characterized in that** said annular seal (17) is made of silicone material, preferably liquid silicone rubber (LSR).

7. The connector according to one or more of the preceding claims, **characterized in that** said first and second sleeves (11, 19) have a hexagonal outer shape.

8. The connector according to one or more of the preceding claims, **characterized in that** said first sleeve (11) and said second sleeve (19) and said ring portions (14, 15) are filled with Aerogel.
